# EUROPEAN PATENT SPECIFICATION

(11) **EP 2 928 831 B1**
(45) Date of publication and mention of the grant of the patent: **12.07.2017**
(21) Application number: 13799663.3
(22) Date of filing: 02.12.2013
(51) Int. Cl.: C02F 1/00, C02F 1/28, B01D 39/04, B01D 39/06, C02F 101/32, C02F 103/36, C02F 103/10, B01J 20/34, B01J 20/28, B01J 20/22, B01J 20/10, B01D 24/46, B01D 24/18, B01D 24/12, B01D 15/20

(54) **FILTRATION ARRANGEMENT AND METHOD**
ANORDNUNG UND VERFAHREN ZUM FILTRIEREN
AGENCEMENT ET PROCÉDÉ DE FILTRATION

(30) Priority: 04.12.2012 GB 201221772; 21.01.2013 GB 201301028
(43) Date of publication of application: 14.10.2015
(73) Proprietor: Enhydra Ltd, Gloucestershire GL12 8AA (GB)
(72) Inventor: LLOYD, David Douglas, Wotton-Under-Edge Gloucestershire GL12 8AA (GB)
(74) Representative: Sales, Robert Reginald
(86) International application number: PCT/GB2013/053180
(87) International publication number: WO 2014/087141

(56) References cited:
- CN-Y- 2 461 913
- CN-Y- 201 216 893
- US-A- 3 814 247
- US-A- 3 900 395
- US-A- 3 925 202
- US-A- 4 530 767
- Clack Corporation: "Clack Garnet - product sheet", , 18 August 2007 (2007-08-18), XP055278647, Retrieved from the Internet: URL:http://web.archive.org/web/20070818171 530/http://www.clackcorp.com/water/pdf/gar net.pdf [retrieved on 2016-06-08]

## Description

This invention relates to a filtration arrangement, a filtration method, and particularly but not exclusively for water produced in an oil field.

Water produced in an oil field contains many contaminants, and particularly oil droplets and suspended solids. It is generally required to clean this water, and this may particularly be the case onshore, and/or if the water is to be returned into an oil well.

Media filtration is often used for such cleaning, where the water is passed downwardly through a particulate filtration media. Ideally such media would be coarser at the top to remove larger suspended solids and/or oil droplets, and have a finer grained lower part. Conventionally such filtration is carried out as a batch process.

Known suitable filtration arrangements are for example those of US 3 925 202 or US 3 814 247. Over time the filtration media will become loaded with material removed from the water. This can be detected for instance by an increased pressure drop across the media, or decreasing flowrate. The media will then require washing. This may be carried out by backwashing fluid through the media to fluidise the media bed, thereby breaking up the bed and scrubbing contaminant material therefrom. This contaminant material can then generally be floated off.

In view inter alia of this, in some prior arrangements media is removed from a filtration vessel for washing. Alternatively or in addition, a paddle or other agitator has previously been employed to assist with washing and scrubbing of the filtration media.

After such a backwash the natural tendency of the bed would be for the coarser particles to locate at the bottom, with the finer particles at the top. This means the media bed would be the opposite way round to the above outlined preferred formation with coarser particles at the top.

When measuring particulate particle sizes, there will always be some variation of particle size, usually with exceptions at both size extremes. Accordingly in this specification the term 'substantial particle size' is used, which means at least 90% of the particles in question will meet the indicated particle size.

According to a first aspect of the invention there is provided a filtration arrangement, the arrangement comprising a vessel with an inlet in an upper part thereof and an outlet in a lower part thereof, a particulate filtration media located in the vessel between the inlet and outlet, the media comprising an upper main portion of crushed nutshells and a lower main portion of garnet. The main nutshell portion may be of greater substantial particle size than the lower main portion.

The lower main portion is of garnet and may have a substantial particle size of 0.3 to 0.6mm, and may have a bulk density of 2400 to 2600 kg/m^{3.}

The nutshells may have a substantial particle size of between 1 and 2mm. The nutshells may be of crushed walnut. The nutshells may have a bulk density of 700 to 800kg/m^{3.}

A particulate support layer is provided below the lower main portion, which is of greater substantial particle size than the lower main portion. The support layer may have a substantial particle size of 1.2 to 2mm, and may have a bulk density of 2400 to 2600 kg/m³.

The support layer is of garnet. According to a second aspect of the invention there is provided a method of filtering water produced in an oil field, the method comprising passing the liquid through a filtration arrangement according to any of the preceding six paragraphs.

Following filtration the particulate material bed may be washed by passing fluid backwards therethrough, and then allowing the layers in the particulate material bed to settle.

The washing fluid may comprise liquid and/or gas. The liquid may be water, and the gas may be process gas, inert gas or air. The gas may be fed into the vessel to cause turbulence in the media, and may be fed into the vessel at such a high volume so as to create agglomerations or 'slugs' of gas which rise through the vessel. The method may be carried out at above atmospheric pressure, but the pressure may be below 1000 kPa (10 bar). An embodiment of the present invention will now be described by way of example only and with reference to the accompanying drawings, in which:

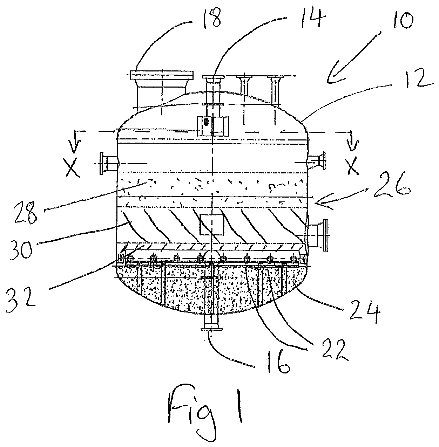

Fig. 1 is a diagrammatic cross sectional side view through a filtration arrangement according to the invention; and

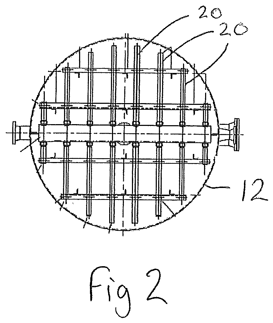

Fig. 2 is a diagrammatic sectional plan view along the line X-X of Fig. 1.

The drawings show an assembly 10 for filtering water produced in an oil field. The arrangement 10 comprises a closed pressure vessel 12 which has an inlet 14 at an upper end and an outlet 16 at a lower end. A removable cover 18 is also provided at the upper end to permit access into the interior of the vessel 12.

A plurality of distributor pipes 20 are connected to the inlet 14 such that water to be filtered entering into the vessel 12 is spread substantially evenly across the vessel 12. A plurality of pipes 22 are also provided towards the lower end of a vessel 12 and are connected to the outlet 16. Below the pipes 22 a concrete base 24 is provided.

Provided between the inlet pipes 20 and outlet pipes 22 a particulate filter media 26 is provided. The media 26 comprises an upper main layer of ground walnut shells 28, a lower main layer 30 of garnet, and a lowermost support layer 32 of garnet.

The main walnut shell layer 28 has a substantial particle size of between 1 and 2mm, and a bulk density of 700 to 800 kg/m³. The main garnet layer 30 has a substantial particle size of 0.3 to 0.6mm, whilst the support layer 32 is of coarser garnet particles with a substantial particle size of 1.2 to 2mm. The main and support garnet particles have a bulk density of 2400 to 2600 kg/m³.

Water to be filtered will enter through the inlet 14 and be distributed across the vessel 12 by the pipes 20. Water will pass into the walnut shell layer 28 which has been found to be highly effective at adsorbing and/or absorbing oil droplets in the water.

The nutshells may also remove from the water coarse, stringy, lint-like or coagulated solids, or general dirt, but this is not the primary function of the nutshell filtration medium.

Water will then pass into the finer garnet layer 30 which has been found to be highly effective at removing suspended solids from the water. The water eventually passes through the support layer 32. The support layer 32 provides essentially no filtration action, but supports the layers 28, 30 and substantially prevents a collection screen (not shown) over the pipes 22 from being blocked by the finer media. The filtered water will be received in the pipes 22 and enter the outlet 16 to pass out of the vessel 12.

This arrangement therefore provides an advantageous coarser upper layer of walnut shells which is particularly good at removing oil droplets from the water. Below this is provided the finer garnet layer to provide removal of suspended solid filtration. The support layer therebeneath helps to support and prevent blockage by the media 26. Filtration will take place at above atmospheric pressure, but generally at a pressure of below 1000 kPa (10 bar). Eventually the media 26 will become loaded with adsorbed, absorbed and/or trapped material, and will require cleaning. This may be detected by an increased pressure drop or decreasing flowrate across the media 26. A backwash fluid in the form of a mixture of liquid and/or gas will be blown through the outlet 16 and hence the pipes 22 to coarse the media 26 to fluidise. The fluid may be a mixture of air and fuel gas, or perhaps air and water.

The backwash fluid causes the particles in the filtration media to be scrubbed and also broken up. The contaminants removed from the particles can be floated off to be removed through the inlet 14.

Gas is injected at such a high volume that it does not form a dispersion but rather forms agglomerations or 'slugs' of gas which rise up in the vessel, expanding. This causes alternating phases, i.e. liquid-gas-liquid-gas etc, in the backwashing media to cause a turbulent flow meaning the particles will scrub against each other. The final part of the backwash may be liquid only.

During the backwashing the support layer will generally be undisturbed, but the other two layers will be fluidised and thoroughly mixed. Gas used in the backwashing breaks up the upper two beds, whilst the backwashing liquid washes the particulate material.

Once the backwashing has been completed, the media 26 principally in the upper two layers is allowed to resettle. Any of the denser coarser garnet particles in the support layer 32 which have been disturbed, with garnet having a specific gravity of around 4 to 4.2, will tend to return to the bottom layer. The finer garnet particles will form a layer thereabove, with the lighter walnut shell particles with a specific gravity of around 1.2 to 1.4 forming a topmost layer. The media 26 will therefore be reformed to the advantageous structure outlined above.

There is thus provided a filtration arrangement, and a method of using such an arrangement for filtering water produced in an oil field, with a number of advantageous features. The particulate media used provides for good removal of oil particles and also suspended solids from the water being filtered. The media can also readily be backwashed but yet returns to an advantageous formation as outlined above. Such an arrangement can be used in a conventional apparatus, thereby not incurring significant additional cost.

The removal of oil particles and solids by filtration takes place in a single process in a single vessel. The filtration media for both stages of filtration can then be backwashed in a single process still within the single vessel, without any requirement for removal of the filtration media from the vessel for washing. This therefore provides significant advantages in operation and equipment requirements relative to prior arrangements.

Various modifications may be made without departing from the scope of the invention. It may be that different particle sizes of nutshells would be required. The garnet may have a different particle size.

Distribution pipes may not be required for water entering the vessel, and a different water inlet arrangement could be used. The filtration vessel may be configured to have a significantly greater horizontal than vertical extent. An additional outlet may be provided in an upper part of the vessel through which the contaminants can be removed.

## Claims

1. A filtration arrangement, the arrangement comprising a vessel with an inlet in an upper part thereof and an outlet in a lower part thereof, a particulate filtration media located in the vessel between the inlet and outlet, the media comprising an upper main portion of crushed nutshells and a lower main portion of garnet, a particulate support layer being provided below the lower main portion, which is of greater substantial particle size than the lower main portion, wherein the support layer is garnet.

2. An arrangement according to claim 1, in which the main nutshell portion is of greater substantial particle size than the lower main portion.

3. An arrangement according to any of the preceding claims, in which the lower main portion has a substantial particle size of 0.3 to 0.6mm, and may have a bulk density of 2400 to 2600 kg/m^{3.}

4. An arrangement according to any of the preceding claims, in which the nutshells have a substantial particle size of between 1 and 2mm, and may have a bulk density of 700 to 800kg/m^{3.}

5. An arrangement according to any of the preceding claims, in which the nutshells are of crushed walnut.

6. An arrangement according to any of the preceding claims, in which the support layer has a substantial particle size of 1.2 to 2mm, and may have a bulk density of 2400 to 2600 kg/m³.

7. A method of filtering water produced in an oil field, the method comprising passing the liquid through a filtration arrangement according to any of claims 1 to 6.

8. A method according to claim 7, in which following filtration the particulate material bed is washed by passing fluid backwards therethrough, and then allowing the layers in the particulate material bed to settle.

9. A method according to claim 8, in which the washing fluid comprises liquid and/or gas.

10. A method according to claim 9, in which the liquid is water.

11. A method according to claims 8 or 9, in which the gas is any of process gas, inert gas or air.

12. A method according to any of claims 9 to 11 in which the gas is fed into the vessel so as to cause turbulence.

13. A method according to any of claims 7 to 12, in which the method is carried out at above atmospheric pressure.

14. A method according to claim 13, in which the method is carried out at above atmospheric pressure but the pressure is below 1000 kPa (10 bar).

## Patentansprüche

1. Filteranordnung, die Anordnung aufweisend einen Kessel mit einem Zulauf in dessen oberen Teil und einem Ablauf in dessen unteren Teil, einem zwischen dem Zulauf und Ablauf angeordneten partikelförmigen Filtermedium, das Medium aufweisend einen oberen Hauptabschnitt aus zerkleinerten Nussschalen und einen unteren Hauptabschnitt aus Granat, eine unter dem unteren Hauptabschnitt vorgesehene partikelförmige Stützschicht, die eine größere wesentliche Partikelgröße hat als der untere Hauptabschnitt, wobei die Stützschicht aus Granat besteht.

2. Anordnung nach Anspruch 1, in der der Haupt-Nussschalenabschnitt eine größere wesentliche Partikelgröße hat als der untere Hauptabschnitt.

3. Anordnung nach einem der vorhergehenden Ansprüche, in der der unter Hauptabschnitt eine wesentliche Partikelgröße von 0.3 bis 0.6mm hat, und eine Schüttdichte von 2400 bis 2600 kg/m³ haben kann.

4. Anordnung nach einem der vorhergehenden Ansprüche, in der die Nussschalen eine wesentliche Partikelgröße von zwischen 1 und 2mm haben, und eine Schüttdichte von 700 bis 800 kg/m³ haben können.

5. Anordnung nach einem der vorhergehenden Ansprüche, in der die Nussschalen zerkleinerte Walnüsse sind.

6. Anordnung nach einem der vorhergehenden Ansprüche, in der die Stützschicht eine wesentliche Partikelgröße von 1.2 bis 2mm hat, und eine Schüttdichte von 2400 bis 2600 kg/m³ haben kann.

7. Verfahren zur Filterung von in einem Ölfeld produziertem Wasser, das Verfahren aufweisend das Hindurchleiten der Flüssigkeit durch eine Filteranordnung nach einem der Ansprüche 1 bis 6.

8. Verfahren nach Anspruch 7, in dem der Filtration folgend das partikelförmige Materialbett gespült wird, indem Fluid rückwärts durch es hindurchgeleitet wird, und dann den Schichten im partikelförmigen Material erlaubt wird zu sedimentieren.

9. Verfahren nach Anspruch 8, in dem das Spülfluid Flüssigkeit und/oder Gas aufweist.

10. Verfahren nach Anspruch 9, in dem die Flüssigkeit Wasser ist.

11. Verfahren nach Anspruch 8 oder 9, in dem das Gas eines von Prozessgas, Inertgas oder Luft ist.

12. Verfahren nach einem der Ansprüche 9 bis 11, in dem das Gas in den Kessel gespeist wird, um Turbulenzen zu erzeugen.

13. Verfahren nach einem der Ansprüche 7 bis 12, in dem das Verfahren oberhalb Atmosphärendruck ausgeführt wird.

14. Verfahren nach Anspruch 13, in dem das Verfahren oberhalb Atmosphärendruck ausgeführt wird aber der Druck unterhalb 1000kPa (10bar) ausgeführt wird.

## Revendications

1. Dispositif de filtration, le dispositif comprenant une cuve avec une entrée dans une partie supérieure de celle-ci et une sortie dans une partie inférieure de celle-ci, un milieu de filtration particulaire situé dans la cuve entre l'entrée et la sortie, le milieu comprenant une partie principale supérieure constituée de coquilles écrasées et une partie principale inférieure constituée de grenat, une couche de support particulaire étant prévue sous la partie principale inférieure, qui a une granulométrie plus importante que la partie principale inférieure, dans laquelle la couche de support est du grenat.

2. Dispositif selon la revendication 1, dans lequel la partie principale constituée de coquille a une granulométrie substantielle plus importante que la partie principale inférieure.

3. Dispositif selon l'une quelconque des revendications précédentes, dans lequel la partie principale inférieure a une granulométrie substantielle de 0,3 à 0,6 mm et peut avoir une densité apparente de 2400 à 2600 kg / m³.

4. Dispositif selon l'une quelconque des revendications précédentes, dans lequel les coquilles ont une granulométrie substantielle comprise entre 1 et 2 mm et peuvent avoir une densité apparente de 700 à 800 kg/m³.

5. Dispositif selon l'une quelconque des revendications précédentes, dans lequel les coquilles sont constituées de coquilles de noix broyées.

6. Dispositif selon l'une quelconque des revendications précédentes, dans lequel la couche de support a une granulométrie substantielle de 1,2 à 2 mm et peut avoir une densité apparente de 2400 à 2600 kg/m³.

7. Procédé de filtrage d'eau produite dans un champ pétrolier, le procédé comprenant l'étape consistant à faire passer du liquide au travers d'un dispositif de filtration selon l'une quelconque des revendications 1 à 6.

8. Procédé selon la revendication 7, dans lequel, après filtration, le lit de matière particulaire est lavé en faisant passer du fluide au travers de celui-ci vers l'arrière, puis en laissant les couches dans le lit de matière particulaire se déposer.

9. Procédé selon la revendication 8, dans lequel le fluide de lavage comprend du liquide et / ou du gaz.

10. Procédé selon la revendication 9, dans lequel le liquide est de l'eau.

11. Procédé selon les revendications 8 ou 9, dans lequel le gaz est l'un quelconque parmi des gaz de transformation, des gaz inertes ou de l'air.

12. Procédé selon l'une quelconque des revendications 19 à 11, dans lequel le gaz est introduit dans le récipient de manière à provoquer une turbulence.

13. Procédé selon l'une quelconque des revendications 7 à 12, dans lequel le procédé est mis en oeuvre à une pression supérieure à la pression atmosphérique.

14. Procédé selon la revendication 13, dans lequel le procédé est mis en oeuvre à une pression supérieure à la pression atmosphérique, mais la pression est inférieure à 1000 kPa (10 bars).
